# EUROPÄISCHE PATENTSCHRIFT

(11) **EP 1 502 496 B1**
(45) Veröffentlichungstag und Bekanntmachung des Hinweises auf die Patenterteilung: **02.06.2010**
(21) Anmeldenummer: 04103320.0
(22) Anmeldetag: 13.07.2004
(51) Int. Cl.: A01F 15/07, B65H 26/02

(54) **Vorrichtung zur Überwachung des Laufs von bahnförmigem Material**
Device for supervising the run of a strip-like material
Dispositif pour la surveillance de la course d'un matériau en forme de bande

(30) Priorität: 30.07.2003 DE 10334740
(43) Veröffentlichungstag der Anmeldung: 02.02.2005
(73) Patentinhaber: DEERE & COMPANY, Moline, Illinois 61265-8098 (US)
(72) Erfinder: Biziorek, Stèphane, 70600, Champlitte (FR)
(74) Vertreter: Magin, Ludwig Bernhard

(56) Entgegenhaltungen:
- EP-A- 0 924 133
- WO-A-98/41450
- DE-U- 20 015 540
- US-A- 2 957 637
- US-A- 4 458 467
- US-A1- 2003 089 864

## Beschreibung

Die Erfindung betrifft eine Vorrichtung zum Überwachen des Laufs von bahnförmigem Material mittels eines mechanisch betätigbaren Sensors, sowie eine Wickelvorrichtung mit einer solchen Vorrichtung.

Die DE C1 197 55 605 bzw. die EP 924 133 A1 offenbart eine Wickelvorrichtung für Erntegutballen, bei der ein Arm mit einer Streckvorrichtung um einen Erntegutballen gedreht wird und dabei auf die Oberfläche des Erntegutballens Streckfolie aufwickelt. Die Streckvorrichtung enthält eine schwenkbare Rolle, deren Schwenkbewegung von einem Hebel-Seilzug-Zusammenbau auf eine kippbare Lasche übertragen wird, die je nach der Stellung der Rolle wiederum in den Erkennungsbereich eines feststehenden Sensors gelangt oder nicht. Erfolgt an der Rolle keine Schwenkbewegung, stellt dies ein Signal dafür dar, dass keine Streckfolie mehr vorhanden ist oder dass sie gerissen ist. Dergleichen Stand der Technik findet sich in der US 4 458 467 A.

Die EP-A1-1 310 153 lehrt die Verwendung eines optischen Sensors oder eines Ultraschallsensors, der auf den Abschnitt einer Folienbahn zwischen einer Vorratsrolle und einem Ballen gerichtet ist. Dieser Sensor ist mit einer elektronischen Steuervorrichtung verbunden, die ermittelt, ob ein Signal vorhanden ist oder nicht und daraus ableitet, ob eine Störung vorliegt. Aufgrund des Schmutzanfalls bei landwirtschaftlichen Pressen und störender akustischer Einflüsse im Bereich des Ultraschallsensors kann nicht von einer äußerst zuverlässigen Funktion ausgegangen werden. Auch aus der WO 98/41450 A1 bekannt gewordene rotierende Sensoren müssen Signale auf eine ortsfeste Steuervorrichtung übertragen, was zu technischen Problemen führen kann.

Die DE 200 15 540 offenbart wiederum einen Sensor, der auf die Auslenkung einer mangels Folie ausschwenkenden Folienhalterung wirkt, nicht aber mit der Folie selbst in Verbindung gerät.

Das der Erfindung zugrunde liegende Problem wird darin gesehen, dass ein hoher baulicher Aufwand dafür notwendig ist, das Vorhandensein von Material zu überprüfen bzw. dass einfachere Lösungen nicht zuverlässig arbeiten.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise kann mit einem einfachen und robusten Bauteil ein Signal erzeugt werden, das das Vorhandensein von Material repräsentiert. Weder sind aufwändige Gestänge bzw. Umlenkglieder erforderlich, noch sind Störungen der optischen oder akustischen Sensoren zu befürchten. Es ist auch sehr leicht zu erkennen und festzustellen, ob der Sensor wirkt bzw. es sind leicht Einstellungen an ihm vorzunehmen. Eine mechanische Betätigung kann direkt oder indirekt erfolgen, sowie auf ein rückstellbares wie auf ein nicht rückstellbares Glied wirken. Die Anbringung des Sensors an einem Rahmen anstatt an den drehenden Armen der Wickelvorrichtung hat den Vorteil, dass keine Signale zwischen sich bewegenden Bauteilen übertragen

Eine einfache Verwirklichung einer mechanischen Impulserzeugung kann mittels eines gefederten Kontaktelements erfolgen, das stets in eine bestimmte Stellung zurückkehrt und dessen Auslenkung einen Impuls erzeugt - entweder weil der Strom unterbrochen oder weil ein Stromfluss erzeugt wurde. In einer einfachen Form kann ein Stift in eine Schraubendruck- oder Zugfeder eingesetzt werden, die auf einen Schalter wirkt. Es kann aber auch ein Kontaktelement mit einem integrierten elektrischen Leiter verwendet werden, dessen Leitfähigkeit sich erfassbar ändert, wenn er verbogen wird. Dies kann z. B. eingebettet in einem Kunststoffstab erfolgen.

Eine weitere Lösung, die keine Rückstellung erfordert und darüber hinaus auch einen Zählimpuls liefern kann, besteht in der Verwendung eines Rades mit Speichen, an die das Material jeweils anschlagen kann, so dass sich das Rad bis zu einem Anschlag weiterbewegt, an dem es bis zur nächsten Berührung wartet.

Wenn die Signale des Sensors mit der Stellung bzw. Bewegung des Rotors abgeglichen werden, wird die Genauigkeit des Signals erhöht, weil Einflüsse, die zu unpassenden Zeiten eintreten, als Störeinflüsse ausgeschlossen werden. Andererseits kann dann, wenn ein Signal zum falschen Zeitpunkt auftritt auch Anlass bestehen, zu prüfen, ob der Sensor in Ordnung ist bzw. ein Schaden an der Wickelvorrichtung selbst vorliegt.

Der Wickelprozess wird nicht unterbrochen, sondern an die neuen Gegebenheiten angepasst, indem beim Erkennen, dass Material nicht mehr vorhanden oder gerissen ist, die Drehgeschwindigkeit des Wickelgegenstands verlangsamt und somit die gewünschte Überlappung benachbarter Lagen von Material beibehalten wird. Desgleichen kann auch die Drehzahl des Rotors mit den Materialabgabevorrichtungen angepasst werden.

In der Zeichnung ist ein nachfolgend näher beschriebenes Ausführungsbeispiel der Erfindung dargestellt. Es zeigt:
- Figur 1: eine Wickelvorrichtung mit einer erfindungsgemäßen Vorrichtung zum Überwachen des Laufs von bahnförmigem Material in Verbindung mit einer Presse in sehr schematischer Darstellung und in Draufsicht und

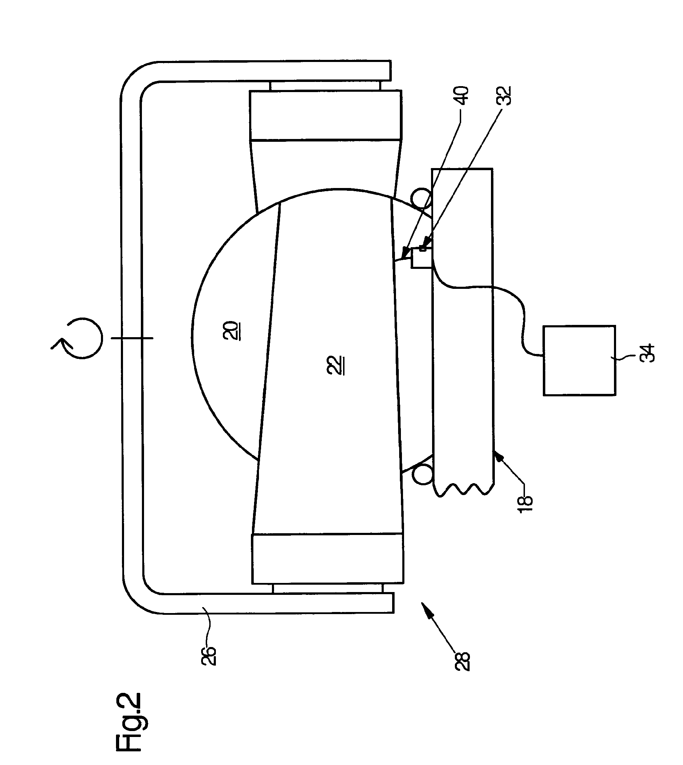

- Figur 2: die Wickelvorrichtung in Seitenansicht.

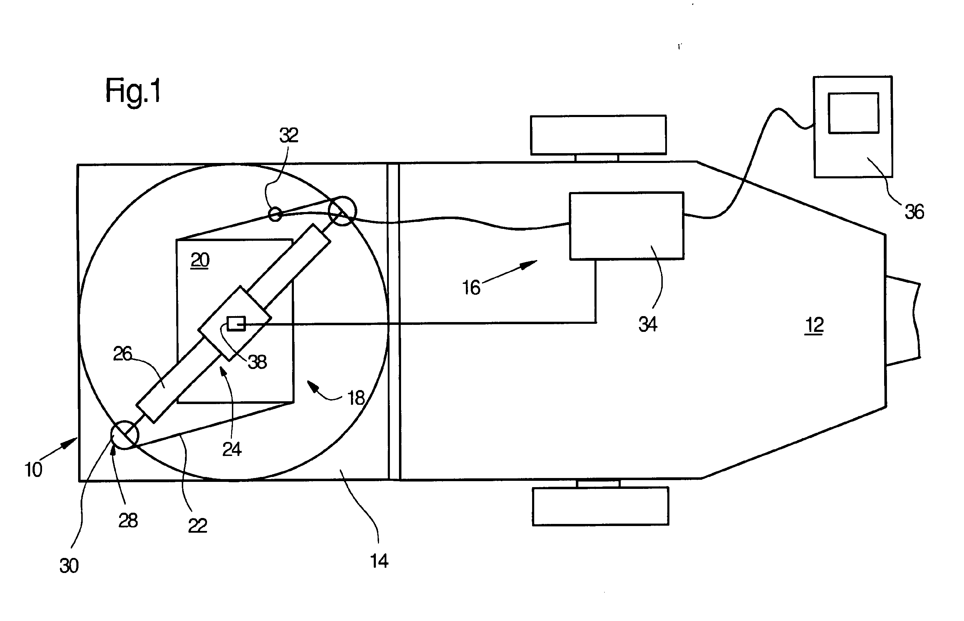

In Figur 1 ist eine an sich bekannte Wickelvorrichtung 10 zusammen mit einer Presse 12 gezeigt, die gemeinsam von einem Rahmen 14 getragen werden. Die Wickelvorrichtung 10 ist mit einer erfindungsgemäßen Vorrichtung 16 zum Überwachen des Laufs von bahnförmigem Material versehen, die ebenfalls schematisch als elektrischer Kreislauf dargestellt ist.

Die Wickelvorrichtung 10 ist in bekannter Weise mit einem Wickeltisch 18 und einem Rotor 24 versehen. Die Wickelvorrichtung 10 kann auch vollkommen unabhängig von der Presse 12 betrieben und ausgebildet und auf einem Rahmen 14 angeordnet werden.

Der Wickeltisch 18 steht fest oder ist verfahrbar und dient der Aufnahme eines in diesem Fall als Ballen ausgebildeten Wickelgegenstands 20 zum Bewickeln mit Material 22. Der Wickeltisch 18 enthält ein nicht gezeigtes Transportband, das einen auf ihm liegenden Wickelgegenstand 18 um eine quer zur Fahrtrichtung verlaufende Achse dreht.

Bei dem Material 22 handelt es sich in diesem Fall um Streckfolie, die verwendet wird, um den Wickelgegenstand 20 luftdicht zu verpacken, und die mit einer Klebeschicht versehen ist oder deren Lagen aufgrund von Adhäsion aufeinander haften. Während der Aufbringung auf den Wickelgegenstand 20 wird das Material 22 erheblich vorgespannt. In anderen Anwendungsfällen kann das Material 22 auch eine gewöhnliche Folie, ein Netz oder dergleichen sein.

Der Rotor 24 ist in diesem Ausführungsbeispiel mit zwei diametral gegenüberliegenden Armen 26 versehen, an deren äußeren Endbereichen jeweils eine Materialabgabevorrichtung 28 angebracht ist, die das Material 22 üblicherweise in Rollenform enthält. Die Materialabgabevorrichtungen 28 sind sehr vereinfacht dargestellt und zeigen nur die Rolle 30, auf der das Material 22 aufgewickelt ist. Materialhalter, Schneidevorrichtung und Streckrollen sind hingegen nicht gezeigt, da sie für die Erfindung nicht bedeutend und an sich hinlänglich bekannt sind. Aus der Zeichnung ist zu entnehmen, dass die Materialabgabevorrichtungen 28 und mit ihnen die Rollen 30 auf einer im Wesentlichen horizontalen Kreisbahn bewegt werden. Der Rotor 24 wird nur während des Wickelvorgangs angetrieben und zwar mit einer konstanten Geschwindigkeit, die auf die des Transportbands in dem Wickeltisch 18 abgestimmt ist, so dass beim Wickelvorgang eine gleichmäßige Überlappung des Materials 22 auf dem Wickelgegenstand 20 erreicht wird. Allerdings kann die Geschwindigkeit an die Zahl der in Betrieb befindlichen Materialabgabevorrichtungen 28 angepasst werden.

Die Vorrichtung 16 zum Überwachen des Laufs von bahnförmigem Material 22 enthält einen Sensor 32, eine Signalverarbeitungsvorrichtung 34 und in diesem Fall ein Endgerät 36, sowie Verbindungen zwischen diesen Drahtverbindungen, drahtlose oder CAN-Bus. Diese Vorrichtung 16 ist Teil von oder Zusatz zu einer ohnehin auf der Wickelvorrichtung 10 oder der Presse 12 vorhandenen nicht gezeichneten Steuer- oder Regelvorrichtung.

Der Sensor 32 ist mit einem Kontaktelement 40 versehen, das federbelastet eine bestimmte Stellung einnimmt. Beispielsweise kann dies ein feiner Stift, Stab, Bügel oder dergleichen sein, der von einer mechanischen Feder aus Metall, Kunststoff oder Holz, oder mittels, Strom oder dergleichen in eine bestimmte Stellung gebracht und dort gehalten wird. Das Kontaktelement 40 ist zwischen zwei Schaltstellungen beweglich und bewirkt die Erstellung eines Steuerimpulses in dem Sensor 32. Das Kontaktelement 40 ist so angeordnet und ausgebildet, dass es in die Bewegungsbahn des Materials 22 während des Wickelvorgangs reicht und folglich jedesmal betätigt wird, wenn das Material 22 an ihm vorbei geführt wird.

Der Sensor 32 bzw. das Kontaktelement 40 ist so angeordnet und ausgebildet, dass es in die Bewegungsbahn des Materials 22 während des Wickelvorgangs, also beim Umlauf des Rotors 24, reicht und folglich jedesmal betätigt wird, wenn das Material 22 an ihm vorbei geführt wird. Es wird folglich pro Materialabgabevorrichtung 28 und pro Umdrehung zu einer bestimmten Zeit ein Impuls erzeugt. Wahlweise kann der Sensor 32 verstellbar an dem Rahmen 14 angebracht sein, so dass er optimal auf die Bewegungsbahn des Materials 22 ausgerichtet werden kann.

Der Sensor 32 ist jedenfalls mit dem Rahmen 14 und nicht mit den Armen 26 verbunden, so dass es einer Übertragung dieses Impulses zwischen einem sich bewegenden und einem festen Bauteil nicht bedarf.

Die Signalverarbeitungsvorrichtung 34 stellt den Oberbegriff für alle erforderlichen insbesondere elektrischen Komponenten dar, die erforderlich sind, aus der Bewegung des Kontaktelements 40 ein elektrisches Signal zu bilden, das zu einer Anzeige bzw. einem Alarm, z. B. an dem Endgerät 36 oder zu einer Veränderung bzw. Unterbrechung des Antriebs des Rotors 24, verwendet werden kann. Selbstverständlich müssen diese Komponenten nicht kompakt in einer Einheit zusammengefasst sein, sondern sie können getrennt an geeigneten Stellen an der Wickelvorrichtung 10, der Presse 12 und/oder gar auf einem nicht gezeigten Zugfahrzeug untergebracht sein. Zu den üblichen und wesentlichen Komponenten gehören Analog-Digitalwandler, Verstärker, Filter, Zeitglieder, Schalter, möglicherweise Speicher und dergleichen auf elektrischer oder elektronischer Basis. In der Signalverarbeitungsvorrichtung 34 ist ein soft- oder hardwaremäßiges Programm enthalten, das prüft, ob der Rotor 24 angetrieben wird und das Kontaktelement 40 funktioniert, z. B. dadurch, dass es grundsätzlich Strom führt. Die Signalverarbeitungsvorrichtung 34 ist auch in der Lage z. B. zu erkennen, ob das Signal von der Auslenkung durch die umlaufenden Arme 26 kommen kann oder von einer sonstigen Erschütterung bzw. der Einwirkung durch einen Gegenstand. Es wird somit insbesondere pro Umdrehung des Rotors 24 und pro Materialabgabevorrichtung 28 ein Impuls erwartet. Da der Impuls zu einer bestimmten Zeit kommen müsste, kann die Signalverarbeitungsvorrichtung 34 z. B. mittels eines Zeitglieds oder eines Vergleiches mit der Stellung der Arme 26 erkennen, ob der empfangene Impuls von dem Material 22 stammt oder nicht.

Das Endgerät 36 kann eine Eingabeeinheit, eine Anzeige, einen Schalter und dergleichen aufweisen, um die Funktion der Wickelvorrichtung 10 und/oder der Presse 12 zu überwachen und zu steuern.

Schließlich kann an dem Rotor 24 ein Sensor 38 vorgesehen sein, dessen Drehbewegung dieser erkennt bzw. der feststellt, ob sich die Arme 26 gerade in einer Stellung befinden, die sich mit der Lage des Sensors 32 deckt.

Die Wickelvorrichtung 10 kann sowohl im landwirtschaftlichen wie auch im industriellen Betrieb eingesetzt werden, wobei in letzterem auch Papier, Stoff oder andere Wickelmaterialien Verwendung finden.

Nach alledem ergibt sich folgende Funktion, wobei davon ausgegangen wird, dass sich auf dem Wickeltisch 18 ein Wickelgegenstand 20 - rund oder quaderförmig - befindet, der gewickelt werden soll.

Zum Ausüben dieses Vorgangs wird entweder automatisch ausgehend von der Signalverarbeitungsvorrichtung 34 oder manuell über das Endgerät 36 das Transportband des Wickeltischs 18 und der Rotor 24 in Drehung versetzt. Zu Beginn der Drehung wird das Material 22 mittels eines nicht gezeigten aber bekannten Anlegers am Wickelgegenstand 20 festgehalten, so dass das Material 22 von der Rolle 30 gezogen werden kann. Wenn sich die Rolle 30 an dem Sensor 32 vorbeibewegt, wird dieser aus einer Schaltstellung in die andere bewegt, wandelt diese Bewegung in ein brauchbares elektrisches Signal um und gibt es in die Signalverarbeitungsvorrichtung 34 weiter, es sei denn, die Umwandlung erfolgt in dieser. Die Signalverarbeitungsvorrichtung 34 erzeugt aus diesem Signal ein Stellsignal, das den Antrieb des Rotors 24 herabsetzt, unterbricht und/oder ein Warnsignal, das die Bedienungsperson hörbar oder visuell von dem Endgerät 36 erreicht. In einem Fall, in dem die Signalverarbeitungsvorrichtung 34 erkennt, dass nicht mehr alle sondern nur noch einige oder eine der vorhandenen Rollen 30 Material 22 abgeben, kann die Signalverarbeitungsvorrichtung 34 auch ein Signal absetzen, das den Antrieb des Rotors 24 oder des Transportbands auf dem Wickeltisch 18 verlangsamt, so dass die gewünschte Überlappung des Materials 22 auf dem Wickelgegenstand 20 erhalten bleibt.

## Patentansprüche

1. Wickelvorrichtung (10) mit einer Vorrichtung (16) zum Überwachen des Laufs von bahnförmigem Material (22) mittels eines mechanisch betätigbaren Sensors (32), mit einem Rahmen (14) und mit einem an diesem und relativ zu einem Wickelgegenstand (20) bewegbaren Rotor (24), der Material (22) trägt, **dadurch gekennzeichnet, dass** der Sensor (32) in die Bewegungsbahn des Materials (22) zwischen einer Materialabgabevorrichtung (28) und dem Wickelgegenstand (20), die relativ zueinander bewegbar sind, reicht und an dem Rahmen (14) vorgesehen ist.

2. Wickelvorrichtung nach Anspruch 1, **dadurch gekennzeichnet, dass** der Sensor (32) ein federbelastetes Kontaktelement (40) aufweist.

3. Wickelvorrichtung nach Anspruch 1, **dadurch gekennzeichnet, dass** der Sensor (32) als Speichenrad ausgebildet ist.

4. Wickelvorrichtung nach einem oder mehreren der Ansprüche 1 bis 3, **dadurch gekennzeichnet, dass** der Sensor (32) mit einer Signalverarbeitungsvorrichtung (34) verbunden ist, die Signale von einem Sensor (38) zur Erfassung der Drehbewegung des Rotors (24) verarbeitet.

5. Wickelvorrichtung nach einem oder mehreren der vorherigen Ansprüche, **dadurch gekennzeichnet, dass** der Rotor (24) mehrere voneinander beabstandete Materialabgabevorrichtungen (28) aufweist und die Drehzahl des Rotors (24) oder eines Wickeltisches (18) in Abhängigkeit von der Anzahl der ordnungsgemäß funktionierenden Materialabgabevorrichtungen (28) gewählt wird.

## Claims

1. Winding apparatus (10) having a device (16) for monitoring the run of web-like material (22) by means of a mechanically actuable sensor (32), having a frame (14) and having a rotor (24) which can be moved on the latter, relative to an object (20) to be wound, and which carries material (22), **characterized in that** the sensor (32) reaches into the movement path of the material (22) between a material delivery device (28) and the object (20), which can be moved relative to one another, and is provided on the frame (14).

2. Winding apparatus according to Claim 1, **characterized in that** the sensor (32) has a springloaded contact element (40).

3. Winding apparatus according to Claim 1, **characterized in that** the sensor (32) is in the form of a spoked wheel.

4. Winding apparatus according to one or more of Claims 1 to 3, **characterized in that** the sensor (32) is connected to a signal processing device (34) which processes signals from a sensor (38) for sensing the rotary movement of the rotor (24).

5. Winding apparatus according to one or more of the preceding claims, **characterized in that** the rotor (24) has a plurality of spaced-apart material delivery devices (28) and the rotational speed of the rotor (24) or of a winding table (18) is selected as a function of the number of properly operating material delivery devices (28).

## Revendications

1. Dispositif d'enroulement (10) comprenant un dispositif (16) pour surveiller le défilement d'un matériau en forme de bande (22) au moyen d'un capteur (32) à actionnement mécanique, comprenant un cadre (14) et un rotor (24) qui supporte le matériau (22) et qui peut se déplacer sur ledit cadre (14) et par rapport à un objet à enrouler (20), **caractérisé en ce que** le capteur (32) s'étend dans la bande de déplacement du matériau (22) entre le dispositif de diffusion de matériau (28) et l'objet à enrouler (20), lesquels sont mobiles l'un par rapport à l'autre, et est prévu sur le cadre (14).

2. Dispositif d'enroulement selon la revendication 1, **caractérisé en ce que** le capteur (32) présente un élément de contact (40) contraint par ressort.

3. Dispositif d'enroulement selon la revendication 1, **caractérisé en ce que** le capteur (32) est réalisé sous la forme d'une roue à rayons.

4. Dispositif d'enroulement selon une ou plusieurs des revendications 1 à 3, **caractérisé en ce que** le capteur (32) est relié avec un dispositif de traitement du signal (34) qui traite les signaux d'un capteur (38) de détection du mouvement de rotation du rotor (24).

5. Dispositif d'enroulement selon une ou plusieurs des revendications précédentes, **caractérisé en ce que** le rotor (24) présente plusieurs dispositifs de diffusion de matériau (28) espacés les uns des autres et la vitesse de rotation du rotor (24) ou d'un plateau d'enroulement (18) est choisie en fonction du nombre de dispositifs de diffusion de matériau (28) qui fonctionnent correctement.
